# EUROPÄISCHE PATENTSCHRIFT

(11) **EP 3 092 112 B1**
(45) Veröffentlichungstag und Bekanntmachung des Hinweises auf die Patenterteilung: **15.04.2020**
(21) Anmeldenummer: 14827436.8
(22) Anmeldetag: 19.12.2014
(51) Int. Cl.: B29B 15/10, B29C 70/46, B29C 70/22

(54) **FASERVERBUNDWERKSTOFF UND VERFAHREN ZU DESSEN HERSTELLUNG**
FIBER COMPOSITE MATERIAL AND METHOD FOR THE PRODUCTION THEREOF
MATIÈRE COMPOSITE RENFORCÉE PAR DES FIBRES ET PROCÉDÉ DE PRODUCTION DE CELLE-CI

(30) Priorität: 09.01.2014 EP 14150631
(43) Veröffentlichungstag der Anmeldung: 16.11.2016
(73) Patentinhaber: PHP Fibers GmbH, 63784 Obernburg (DE)
(72) Erfinder: VIETH, Christian, 63939 Wörth (DE); FLACHENECKER, Andreas, 45276 Essen (DE); SIEJAK, Volker, 47259 Duisburg (DE)
(74) Vertreter: CPW GmbH
(86) Internationale Anmeldenummer: PCT/EP2014/078850
(87) Internationale Veröffentlichungsnummer: WO 2015/104178

(56) Entgegenhaltungen:
- DE-A1-102012 018 801

## Beschreibung

Die vorliegende Erfindung ist auf Faserverbundwerkstoffe sowie deren Herstellung gerichtet. Produkte daraus können z. B. Organobleche sein, die gegenwärtig vor allem im Automobil- und Flugzeugbau eingesetzt werden. Weitere Potenziale bestehen bei der Fertigung von Frontends, Sitzen, Trägern und Pedalen.

Organobleche sind Faser-Matrix-Halbzeuge. Sie bestehen aus einem Gewebe oder einem Gelege aus Endlosfasern, eingebettet in eine thermoplastische Kunststoffmatrix. Die Vorteile einer thermoplastischen Matrix liegen im hohen Automatisierungspotential, wie z.B. der kontinuierlichen Herstellung und der Warmumformfähigkeit der Halbzeuge und den daraus resultierenden kürzeren Prozesszeiten im Vergleich zu konventionellen duroplastischen Faserverbundwerkstoffen. Dies ist besonders in der Automobilindustrie mit ihren kurzen Prozesszeiten von hohem Interesse. Häufig verwendete Faserwerkstoffe sind Glas, Aramid und Kohlenstoff (Carbon). Bei Geweben und Gelegen können die Fasern auch rechtwinklig zueinander verlaufen, so dass die mechanischen Eigenschaften wie Steifigkeit, Festigkeit und Wärmeausdehnung besser als bei ihren metallischen Vorbildern definiert werden können. Im Gegensatz zu Metallblechen ist das Zug- und Druckverhalten nicht symmetrisch.

Gewöhnlich erfolgt die Herstellung der hochfesten thermoplastischen Faserverbundwerkstoffe, indem zunächst eine Schar aus kontinuierlichen Endlosfilamenten, wie Kohlenstofffasern, Aramidfasern oder Glasfasern, als Verstärkungsfasern vorgelegt wird. Anschließend wird eine Schlichte aus Matrixmaterial aus einem thermoplastischen Klebematerial - wie Polyamidharze, thermoplastisches Polyurethan oder Polyester - über und/oder unter den Verstärkungsfasern aufgebracht. Das Matrixmaterial wird anschließend durch Temperatur und ggf. Druck zum Schmelzen gebracht, um den Faserverbundwerkstoff zu erhalten. Ein solches Verfahren ist beispielsweise in der WO 2005/033390 A2 offenbart.

Ein anderes Verfahren ist aus der US 5,445,693 bekannt: ein Faserverbundwerkstoff enthaltend mehrere Lagen aus Verstärkungsfasern und mehrere damit in Verbindung gebrachte Lagen aus Bändchengarnen wird thermisch und unter Druck verfestigt. Selbstverständlich sind auch Matrixmaterialien aus vernetzbaren Materialien und ähnliches üblich und dem Fachmann an sich bekannt.

Für die Anwendung als Organobleche können auch Hybridfaserverbundwerkstoffe eingesetzt werden, bei denen man neben den Verstärkungsfilamenten noch weitere Filamente einlaufen lässt, die als Matrixmaterial dienen sollen. Vorzugsweise werden die Filamente unidirektional ausgerichtet, was z.B. durch ein Vereinzeln der Filamente mittels geeigneter Führungseinrichtungen und Fadenleitorgane erreichbar ist. Letztlich wird auch hier wiederum ein Matrixmaterial bzw. Fixiermittel aufgebracht, um den Verbundwerkstoff thermisch oder chemisch herzustellen.

Die bekannten Verfahren zur Herstellung der Hybridfaserverbundwerkstoffe haben den Nachteil, dass eine gleichmäßige Auftragung des Matrixmaterials mitunter schwierig zu bewerkstelligen ist. Hinzu kommt, dass häufig verschiedene Arten von Filamenten vereinzelt bzw. aufgespreizt werden müssen, was bei den unterschiedlichen mechanischen Eigenschaften dieser Filamente zu Problemen führen kann.

Die vorliegende Erfindung löst dieses Problem, indem sie einen Faserverbundwerkstoff enthaltend eine oder mehrere Lage(n) aus Verstärkungsfasern oder -filamenten zur Verfügung stellt, der eine oder mehrere damit in Verbindung gebrachte Lage(n) aus Bändchengarnen enthält.

Im Rahmen der vorliegenden Erfindung wird unter dem Begriff "Bändchengarne" eine gespreizte Anordnung von unidirektional ausgerichteten Filamenten verstanden, wobei das Breiten- zu Dickenverhältnis der Anordnung mindestens 10:1, bevorzugt 50:1, noch bevorzugter 40:1 und am meisten bevorzugt 30:1 beträgt, beispielsweise eine Dicke von 0,2 mm und eine Breite von 6 mm. Diese Anordnung wird fixiert mittels geeigneter Binder, wie zum Beispiel Schlichten oder thermoplastische Klebstoffe.

Als Bändchengarne werden bevorzugt diejenigen Materialen eingesetzt, die in der WO2013/117728 beschrieben sind. Der große Vorteil bei diesen Materialien liegen in der einfachen Handhabung, der besonders gleichmäßigen Verteilung des Matrixmaterials, der Erzielung kurzer Konsolidierungswege und im Erhalt eines sehr gleichmäßigen Produktes. Man kann z.B. die verdrehungsfrei aufgewickelten Bändchengarne einfach transportieren und an Ort und Stelle einsetzen.

Für den Faserverbundwerkstoff gemäß Erfindung ist es bevorzugt, dass zumindest eine Lage der Verstärkungsfasern oder -filamente zwischen zwei Lagen aus Bändchengarnen liegt. Durch diese Sandwich-Struktur kommt es zur Ausbildung von sehr gleichmäßigen Vorprodukten, die sich in einfacher und günstiger Weise in Folgeschritten weiterverarbeiten lassen.

Demzufolge enthält der Faserverbundwerkstoff gemäß Erfindung in seinen Bändchengarnen Garne aus Polyamid 6, Polyamid 6.6., Polyester, wie Polyethylenterephthalat, oder Polypropylen. Solche bevorzugten Bändchengarne werden z.B. unter Bezeichnung Enka TecTape von der Fa. PHP Fibers, Obernburg (Deutschland) angeboten.

Darüber hinaus ist die Erfindung auf ein Verfahren zur Herstellung eines Faserverbundwerkstoffes gerichtet, bei dem eine oder mehrere Lage(n) aus Verstärkungsfasern- oder filamenten mit einer oder mehreren Lagen aus Bändchengarnen in Verbindung gebracht werden.

Dabei wird es bevorzugt, wenn die Lagen aus Bändchengarnen von einen oder mehreren Rollen abgewickelt werden. In einer weiteren bevorzugten Ausführungsform liegen auch die Verstärkungsfilamente selbst in Form von Bändchengarnen vor.

Der so erhaltene Faserverbundwerkstoff wird anschließend thermisch und/oder unter Druck konsolidiert, um dann u.a. als sogenanntes Organoblech weiterverarbeitet zu werden.

In einer nicht erfindungsgemäßen Ausführungsform werden die Lagen der Verstärkungsfasern und -filamente mit den Lagen der Bändchengarne miteinander verdreht bzw. verzwirnt, sodass ein Zusammenhalt ggf. sogar ohne thermische Behandlung bzw. Druck möglich ist. Naturgemäß gelingt dies dann vorzüglich, wenn alle Lagen - also auch die die Verstärkungslagen bildenden Fasern oder Filamente - als Bändchengarn vorliegen.

Die Erfindung ist auch auf ein Verfahren gerichtet zur Herstellung der Faserverbundwerkstoffe, welches durch die Ansprüche 4 bis 6 näher gekennzeichnet wird.

Ferner soll die Erfindung anhand der nachfolgenden Beispiele näher erläutert werden, wobei selbstverständlich diese Beispiele in keiner Weise die Erfindung einschränken sollen.

### Beispiel 1

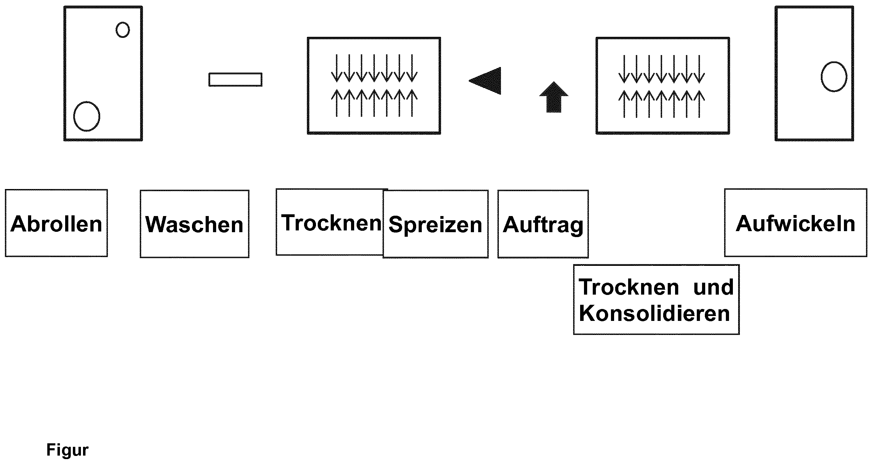

Es wurden Bändchengarne aus Polyamid-6 Multifilamenten mit einem Nominaltiter von 1880 dtex f280 hergestellt, wie in der WO 2013/117728 beschrieben. Die Herstellung umfasste die folgenden Schritte und wird auch durch die Prinzipskizze in der Figur erläutert:
- Abrollen des Garnes
- Ggf. Waschen
- Trocknen
- Spreizen
- Auftrag von 5 Gew.% des Binders Griltex 2A der Fa. EMS-Chemie AG (ein Copolyamid in wässriger Dispersion)
- Konsolidieren des Copolyamids im Ofen bei 120 °C
- Verdrehungsfreies Aufwickeln

### Beispiel 2

Das Beispiel 1 wurde wiederholt mit dem Unterschied, dass anstelle des Polyamid-6 ein Glasmultifilamentgarn des Titers 12000 dtex f 2000 (haftungsaktiviert) eingesetzt wurde.

Auftrag von 5 Gew.% des Binders Griltex 2A der Fa. EMS-Chemie AG (ein Copolyamid in wässriger Dispersion) bzw. von 2 Gew.-% Schlichte

### Beispiel 3

Die aus den obigen Beispielen erhaltenen Bändchengarne wurden zur Herstellung des Faserverbundwerkstoffes (in diesem Fall Glasfaser-Hybrid-Rovings) wie folgt behandelt:
a) 1 Lage Polyamid-6 Bändchengarn und 1 Lage Glasmultifilament-Bändchengarn
b) Schichtenweiser Aufbau (3-lagig Sandwich):
   1 Lage Polyamid-6 Bändchengarn (oben), 1 Lage Glasmultifilament-Bändchengarn (Mitte) und 1 Lage Polyamid-6 Bändchengarn (unten).
c) Schichtenweiser Aufbau (5-lagig Doppelsandwich):
   1 Lage Polyamid-6 Bändchengarn (oben), gefolgt von 1 Lage Glasmultifilament-Bändchengarn und 1 Lage Polyamid-6 Bändchengarn, dann wiederum 1 Lage Glasmultifilament-Bändchengarn und schließlich 1 Lage Polyamid-6 Bändchengarn (unten).

Die o.g. Glasfaser-Hybrid-Rovings werden mittels des Copolyamids und/oder der Schlichte verklebt (vorfixiert) Die entstandenen Rovings werden verdrehungsfrei aufgewickelt.

Alternativ erfolgt nur ein Aufheizen der einzelnen Lagen im Ofen bei ca. 120 °C, was ein Anschmelzen des Copolyamids bewirkt, anschließend werden die Lage durch Zusammendrücken mittels Walzen (Kalander) konsolidiert und verdrehungsfrei aufgewickelt.

## Patentansprüche

1. Faserverbundwerkstoff enthaltend eine oder mehrere Lagen(n) aus Verstärkungsfasern oder -filamenten und eine oder mehrere damit in Verbindung gebrachte Lage(n) aus Bändchengarnen, d. h. einer gespreizten Anordnung von unidirektional ausgerichteten Filamenten, wobei die Verstärkungsfasern oder -filamente ausgewählt sind aus einer Gruppe enthaltend Kohlenstofffasern, Glasfasern, Basaltfasern und/oder Aramidfasern und es sich bei den Garnen der Bändchengarnen um aliphatische Polyamide wie Polyamid 6, Polyamid 6.6, Polyamid 4.6, aromatische Polyamide wie PPA, Polyester, wie Polyethylenterephthalat, oder Polypropylen-Garne handelt, wobei der Faserverbundwerkstoff thermisch und/ oder unter Druck verfestigt ist, **dadurch gekennzeichnet, dass** die Lagen der Verstärkungsfasern oder - filamente nicht mit den Lagen der Bändchengarne miteinander verdreht bzw. verzwirnt sind, sodass der Zusammenhalt nur durch die thermische Behandlung bzw. die Behandlung unter Druck ermöglicht ist.

2. Der Faserverbundwerkstoff nach Anspruch 1, **dadurch gekennzeichnet, dass** zumindest eine Lage der Verstärkungsfasern oder -filamente zwischen zwei Lagen aus Bändchengarnen liegt.

3. Faserverbundwerkstoffnach Anspruch 1, **dadurch gekennzeichnet, dass** die Verstärkungsfasern oder -filamente ebenfalls als Bändchengarn vorliegen.

4. Verfahren zur Herstellung eines Faserverbundwerkstoffes nach einem der vorhergehenden Ansprüche, wobei eine oder mehrere Lage(n) aus Verstärkungsfasern oder -filamenten mit einer oder mehreren Lagen aus Bändchengarnen in Verbindung gebracht werden, die Bändchengarne im
Wesentlichen aus Polyamid 6- oder Polypropylen-Garnen bestehen und die Verstärkungsfasern oder -filamente ausgewählt sind aus einer Gruppe enthaltend Kohlestoffasern, Glasfasern, Basaltfasern und Aramidfasern, wobei der Faserverbundwerkstoff anschließend thermisch und/oder unter Druck verfestigt wird.

5. Das Verfahren nach Anspruch 4, **dadurch gekennzeichnet, dass** die Lagen aus Bändchengarnen von einer oder mehreren Rollen verdrehungsfrei abgerollt werden.

6. Das Verfahren nach einem oder mehreren der vorhergehenden Ansprüche 4 bis 5, **dadurch gekennzeichnet, dass** das die Verstärkungsfasern oder -filamente ebenfalls als Bändchengarnlage zugeführt werden.

## Claims

1. Fibre composite material containing one or several layer(s) made of reinforcing fibres or reinforcing filaments and one or several layer(s), brought into connection therewith, of ribbon yarns, i.e. a spread arrangement of unidirectionally oriented filaments, wherein the reinforcing fibres or reinforcing filaments are selected from a group containing carbon fibres, glass fibres, basalt fibres and/or aramid fibres and the yarns of the ribbon yarns are aliphatic polyamides such as polyamide 6, polyamide 6.6, polyamide 4.6, aromatic polyamides such as PPA, polyester, such as polyethylene terephthalate, or polypropylene yarns, wherein the fibre composite material is solidified thermally and/or under pressure, **characterised in that** the layers of the reinforcing fibres or reinforcing filaments are not twisted or entangled with the layers of the ribbon yarns, such that the cohesion is facilitated only by means of the thermal treatment or the treatment under pressure.

2. The fibre composite material according to claim 1, **characterised in that** at least one layer of the reinforcing fibres or reinforcing filaments lies between two layers of ribbon yarns.

3. Fibre composite material according to claim 1, **characterised in that** the reinforcing fibres or reinforcing filaments are also present as ribbon yarns.

4. Method for producing a fibre composite material according to any of the preceding claims, wherein one or several layer(s) of reinforcing fibres or reinforcing filaments are brought into connection with one or several layers of ribbon yarns, the ribbon yarns substantially consist of polyamid 6 yarns or polypropylene yarns and the reinforcing fibres or reinforcing filaments are selected from the group containing carbon fibres, glass fibres, basalt fibres and aramid fibres, wherein the fibre composite material is subsequently solidified thermally and/or under pressure.

5. The method according to claim 4, **characterised in that** the layers made of ribbon yarns are unrolled from one or several rolls in a torsion-free manner.

6. The method according to one or several of the preceding claims 4 to 5, **characterised in that** the reinforcing fibres or reinforcing filaments are also supplied as a ribbon yarn layer.

## Revendications

1. Matériau composite renforcé par des fibres, contenant une ou plusieurs couches de fibres ou filaments de renfort et une ou plusieurs couches, liées aux précédentes, de fils de bandelettes, c'est-à-dire un agencement étalé de filaments orientés dans la même direction,
dans lequel les fibres ou filaments de renfort sont sélectionnés dans un groupe contenant des fibres de carbone, des fibres de verre, des fibres de basalte et/ou des fibres aramides et les fils de bandelettes sont des polyamides aliphatiques tels que polyamide 6, polyamide 6.6, polyamide 4.6, polyamides aromatiques tels que PPA, polyesters, tels que polytéréphtalate d'éthylène, ou fils de polypropylène,
dans lequel le matériau composite renforcé par des fibres est renforcé thermiquement et/ou sous pression,
**caractérisé en ce que** les couches des fibres ou filaments de renfort ne sont pas tordues ou décalées en rotation les unes par rapport aux autres avec les couches des fils de bandelettes, de telle sorte qu'il est possible d'assurer la cohésion seulement par le traitement thermique ou par le traitement sous pression.

2. Matériau composite renforcé par des fibres selon la revendication 1, **caractérisé en ce qu'**au moins une couche des fibres ou filaments de renfort se trouve entre deux couches de fils de bandelettes.

3. Matériau composite renforcé par des fibres selon la revendication 1, **caractérisé en ce que** les fibres ou filaments de renfort se présentent également sous forme de fils de bandelettes.

4. Procédé de fabrication d'un matériau composite renforcé par des fibres selon l'une quelconque des revendications précédentes, dans lequel une ou plusieurs couches de fibres ou filaments de renfort sont liées à une ou plusieurs couches de fils de bandelettes, les fils de bandelettes sont constitués globalement de fils de polyamide 6 ou de polypropylène et les fibres ou filaments de renfort sont sélectionnés dans un groupe contenant des fibres de carbone, des fibres de verre, des fibres de basalte et des fibres aramides et dans lequel le matériau composite renforcé par des fibres est ensuite renforcé thermiquement et/ou sous pression.

5. Procédé selon la revendication 4, **caractérisé en ce que** les couches de fils de bandelettes sont déroulées sans torsion d'un ou plusieurs rouleaux.

6. Procédé selon une ou plusieurs des revendications précédentes 4 à 5, **caractérisé en ce que** que les fibres ou filaments de renfort sont également amenés sous forme de couche de fils de bandelettes.
